# EUROPÄISCHE PATENTANMELDUNG

(11) **EP 3 147 053 A1**
(43) Veröffentlichungstag der Anmeldung: **29.03.2017**
(21) Anmeldenummer: 16177161.3
(22) Anmeldetag: 30.06.2016
(51) Int. Cl.: B23B 31/00, B23B 31/02, B23B 31/12

(54) **SPANNFUTTER**

(30) Priorität: 22.09.2015 DE 102015116008
(71) Anmelder: Metabowerke GmbH, 72622 Nürtingen (DE)
(72) Erfinder: STOLL, Michael, 70374 Stuttgart (DE)
(74) Vertreter: Markfort, Iris-Anne Lucie

(57) **Zusammenfassung**

Die vorliegende Erfindung betrifft ein Spannfutter (20) zum Einspannen von Werkzeugen in eine Elektrohandwerkzeugmaschine mit einem Futterkörper (22) und relativ zum Futterkörper (22) bewegbaren Spannbacken (24) sowie einem innerhalb des Futterkörpers (22) aufgenommenen Einsatz (30), wobei der Einsatz (30) wenigstens eine zentral angeordnete Mehrkant-Aufnahme (32, 34, 36) zur Aufnahme und Verdrehsicherung eines korrespondierenden Mehrkant-Endabschnitts eines Gewindebohrers aufweist und wobei im montierten Zustand des Spannfutters (20) der Einsatz (30) unverlierbar innerhalb des Futterkörpers (22) aufgenommen ist.

## Beschreibung

Die Erfindung betrifft ein Spannfutter zum Einspannen von Werkzeugen in einer Elektrohandwerkzeugmaschine, insbesondere von einem Gewindeschneider in einer Bohrmaschine, einem Bohrhammer, einem Schrauber oder dergleichen.

Aus dem Stand der Technik sind unterschiedlichste Spannfutterlösungen zur Aufnahme von üblichen Werkzeugen bekannt. Ein Beispiel ist in der Offenlegungsschrift DE 101 57 055 A1 der Anmelderin offenbart, die ein Spannfutter zum schlüssellosen Einspannen von Werkzeugen beschreibt. Bei dieser Lösung sind drei Spannbacken vorgesehen, die mit einem Zwischenring der Sperreinrichtung zusammenwirken, um bei einer Verdrehung relativ zum Futterkörper in eine Spannlage gebracht zu werden, bei der die Spannbacken gegeneinander oder ein eingespanntes Werkzeug anliegen. Die drei Spannbacken sind im 120°-Winkel zueinander vorgesehen und führen bei der Schließ- bzw. Öffnungsbewegung eine axiale-radiale Bewegung durch. Zusätzlich ist in dem Bohrfutter gemäß diesem Stand der Technik eine Sperreinrichtung vorgesehen, die die gespannten Spannbacken in ihrer Spannstellung sichert.

Ein Vorteil dieser Lösung, neben der Sicherung der Spannbacken besteht grundsätzlich darin, dass über das Vorsehen von wenigstens drei Spannbacken eine Zentrierung eines aufgenommenen Werkzeugs in der Werkzeugaufnahme erfolgt. Dies ist insbesondere bei Werkzeugen von Vorteil, bei denen der Spannschaft, d. h. der Abschnitt des Werkzeugs, der zum Spannen über das Spannfutter vorgesehen ist, einen kreiszylinderförmigen Aufbau hat.

Übliche Gewindebohrwerkzeuge bzw. Gewindeschneidwerkzeuge (auch Gewindebohrer oder Gewindeschneider genannt) besitzen einen Spannschaft mit einem Vierkant-Endabschnitt. Diese spezifische Ausgestaltung des Spannschafts eines Gewindebohrers kann, wie sich in der Praxis gezeigt hat, je nach Größe des Gewindebohrers und damit Größe des Spannschafts zum Durchrutschen des eingespannten Werkzeugs in dem vorstehend beschriebenen Drei-Backen-Spannfutter führen. Ein Praxistest hat dabei gezeigt, dass beispielsweise Gewindebohrer, die zum Schneiden eines Gewindes ab der Größe M8 geeignet sind, beim Gewindeschneiden in Stahl nicht mehr ausreichend in einem üblichen Drei-Backen-Spannfutter, wie dem aus dem Stand der Technik bekannt, gehalten werden können.

Dieses Problem ist bereits durch unterschiedliche Lösungen im Stand der Technik adressiert worden.

So ist beispielsweise in der Druckschrift DE 84 29 380 U1 ein Zwei-Backen-Gewindeschneid-Futter beschrieben, bei dem der Vierkant-Endabschnitt des Gewindeschneiders zwischen nur zwei gegenüberliegenden Backen aufgenommen wird. Dies entspricht auch der grundsätzlichen Lösung eines Windeisens, wie es beim Handgewindeschneiden verwendet wird. Vorteilhaft bei dieser Lösung ist, dass unterschiedlich große Gewindebohrer aufgenommen werden können. Als Nachteil hat sich jedoch in der Praxis gezeigt, dass das aufgenommene Werkzeug durch das Vorsehen von nur zwei Spannbacken nicht zentriert werden kann, wodurch Ungenauigkeiten entstehen, die ein Anwender nicht hinnehmen möchte. Weiterhin erhöht sich hierdurch auch das Risiko, den Gewindebohrer abzubrechen, was für einen Anwender ebenfalls nicht hinnehmbar ist.

Weiterhin ist es auch bekannt, eine Spannzange zur Aufnahme eines Gewindebohrers vorzusehen. Vorteilhaft ist dabei, dass eine Spannzange mit ihrer hohen Spannkraft das Durchrutschen des Gewindebohrers verhindern kann. Als nachteilig wird jedoch von den Anwendern empfunden, dass für jede Größe des Gewindebohrers eine eigene Spannzange vorgesehen werden muss, was vergleichsweise kostspielig für den Anwender ist. Weiterhin kann eine separate Spannzange verloren gehen, was für den Anwender weiterhin ärgerlich und kostspielig ist.

Auf dem technischen Gebiet der Drehmaschinen ist es bekannt, einen separaten Halter mit einer Werkzeugaufnahme und Mitteln zur Befestigung, Fixierung und zur Verdrehsicherung des Werkzeugs vorzusehen. Der Halter weist eine Aufnahmeöffnung in der Art einer Sacklochbohrung auf, wobei der Endabschnitt der Sacklochbohrung als Vierkantausnehmung ausgebildet ist. Der Halter wird zusammen mit einem eingesetzten Gewindebohrer in der Werkzeugaufnahme der Drehmaschine eingesetzt und zusätzlich radial gesichert. Auch bei dieser Lösung, wie sie beispielsweise in der Gebrauchsmusterschrift DE 20 2010 006 261 U1 im Zusammenhang mit Drehmaschinen beschrieben ist, muss für jede Größe eines Gewindebohrers ein spezieller Halter vorgesehen sein, um eine sichere Aufnahme des jeweiligen Vierkant-Endabschnitts des Gewindebohrers in der Vierkantausnehmung sicherzustellen. Der bzw. die Halter können ferner verloren gehen.

Im Bereich von CNC-Maschinen ist schließlich ein Einsatz für Gewindebohrer bekannt, der eine Kegelspannzange mit einem einstückig verbundenen Spannglied umfasst. Beispielsweise ist diese Lösung in dem Europäischen Patent EP 0 993 893 B1 beschrieben. Der Einsatz umfasst dabei einen Einsatzkörper mit einer die Drehverbindung bildenden Vierkant-Aufnahme für einen Vierkant-Endabschnitt des Gewindebohrers.

Auch bei dieser Lösung ergibt sich rein logisch die Notwendigkeit für unterschiedlich große Gewindebohrer unterschiedliche Einsätze vorzusehen. Weiterhin können auch die unterschiedlichen Einsätze in demontiertem Zustand verloren gehen.

Dem gegenüber besteht eine Aufgabe der vorliegenden Erfindung darin, die bekannten Nachteile von Spannfuttern zu verringern und ein Spannfutter bereitzustellen, das insbesondere auch für die Aufnahme von größer dimensionierten Gewindebohrern geeignet ist.

Demgemäß umfasst die vorliegende Erfindung ein Spannfutter zum Einspannen von Werkzeugen in eine Elektrohandwerkzeugmaschine mit einem Futterkörper und relativ zum Futterkörper bewegbaren Spannbacken sowie einen innerhalb des Futterkörpers aufgenommenen Einsatz, wobei der Einsatz wenigstens eine zentral angeordnete Mehrkant-Aufnahme zur Aufnahme und Verdrehsicherung eines korrespondierenden Mehrkant -Endabschnitts eines Gewindebohrers aufweist und wobei im montierten Zustand des Spannfutters der Einsatz unverlierbar innerhalb des Futterkörpers aufgenommen ist.

Der erfindungsgemäße Einsatz dient mit Hilfe der wenigstens einen daran angeordneten Mehrkant -Aufnahme zur Aufnahme und Verdrehsicherung des Gewindebohrers, während die Spannbacken zum Spannen und Fixieren dienen. Insbesondere können drei Spannbacken vorgesehen sein, sodass die bekannten Vorteile eines solchen Drei-Backen-Spannfutters, nämlich die Zentrierung des darin aufgenommenen Werkzeugs, genutzt werden können, ohne gleichzeitig den Nachteil eines Durchrutschens des Gewindebohrers ab einer bestimmten Größe in Kauf nehmen zu müssen. Insbesondere kann daher die Mehrkant -Aufnahme zur Aufnahme von Gewindebohrern genutzt werden, die zum Schneiden eines Gewindes größer als M8 eingesetzt werden. Dabei kann die weingstens eine Mehrkant-Aufnahme insbesondere als Zweikant-, Dreikant- oder Vierkant-Aufnahme ausgebildet sein.

Anders als im Stand der Technik der benachbarten technischen Gebiete, im Bereich Drehmaschinen bzw. CNC-Maschinen, ist der Einsatz unverlierbar innerhalb des Futterkörpers aufgenommen und muss nicht gesondert in das Spannfutter eingesetzt werden, wenn ein entsprechender Gewindebohrer aufgenommen werden soll.

Um den Einsatz für unterschiedlich große Gewindebohrer einsetzen zu können, kann bei einer Weiterentwicklung der Erfindung vorgesehen sein, dass der Einsatz mehrerer in axialer Richtung ineinander übergehende zentral angeordnete Mehrkant - Aufnahmen aufweist, die unterschiedliche Größen haben und im Längsschnitt betrachtet eine gestufte Ausnehmung bilden. Auch können die ineinander übergehenden Mehrkant-Aufnahmen gleichartig ausgebildet sein, z.B. alle als Vierkant-Aufahme oder alle als Zweikant-Aufnahme oder alle als Drekant-Aufnahme. Alternativ können die ineinander übergehenden Mehrkant-Aufnahmen auch zumindest teilweise unterschiedlich ausgebildet sein, wodurch sich in logischer Konsequenz bereits eine unterschiedliche Größe der Aufnahmen ergeben kann. So kann beispielsweise eine Aufnahme als Zweikant-Aufnahme, eine als Dreikant-Aufnahme und eine als Vierkant-Aufnahme vorgesehen sein. Auch weitere alternative Kombinationen unterschiedlicher Aufnahmegeometrien für die einzelnen ineinanderübergehenden Mehrkant-Aufnahmen sind selbstverständlich denkbar, wie mehrere gleichartiger Mehrkant-Aufnahmen unterschiedlicher Größe in Kombination mit wenigstens einer Mehrkant_Aufnahme anderer Art und ggf. Größe.

Die axiale Richtung ist dabei auf die Längsachse des Futterkörpers bezogen, die mit der Längsachse eines aufgenommenen Werkzeugs zusammenfällt. Demgemäß bezeichnet ein Längsschnitt eine Schnittebene, die mit der Längsachse zusammenfällt.

Durch das Vorsehen mehrerer ineinander übergehender Mehrkant-Aufnahmen kann mittels eines einzigen Einsatzes das Spannfutter für die verdrehsichere Aufnahme mehrerer unterschiedlich großer oder unterschiedlich artiger Gewindebohrer (beispielsweise Gewindebohrer mit unterschiedlichen Gewindeschaftgeometrien) bereitgestellt werden. Im Längsschnitt betrachtet sind die Ausnehmungen axial aufeinanderfolgend angeordnet, sodass sich eine gestufte Ausnehmung zeigt. Dabei werden die einzelnen Mehrkantausnehmungen mit zunehmendem Abstand von der Werkzeugseite in ihren Abmessungen immer kleiner bzw. weisen weniger Kanten auf.

Bei einer Ausgestaltung der einzelnen Mehrkant-Aufnahmen als Vierkant-Aufnahmenhaben diese beispielsweise Abmessungen, die den typischen Schlüsselweiten von Gewindebohrern entsprechen, die ≥ (größer oder gleich) M8 sind, beispielsweise M8, M10 und M12. Diese entsprechen 6mm (M8), 8mm (M10) und 9mm (M12).

Andere Abstufungen oder das Vorsehen von nur zwei oder mehr als drei ineinander übergehenden Mehrkant-Aufnahmen ist selbstverständlich ebenfalls denkbar.

In der Regel sind die Gewindebohrer und auch der jeweilige Spannschaft in Abhängigkeit von der Größe des damit schneidbaren Gewindes auch unterschiedlich lang, d. h. der Spannschaft eines Gewindebohrers zum Schneiden eines M8-Gewindes ist kürzer als der eines Gewindebohrers zum Schneiden eines M16-Gewindes. Um diesen Längenunterschied zumindest teilweise auszugleichen, kann vorgesehen sein, dass der Einsatz im Inneren des Futterkörpers axial verlagerbar ist. Insbesondere kann ein separat ausgebildeter Stellring vorgesehen sein, der zur axialen Verstellung des Einsatzes relativ zu dem Einsatz manuell verdrehbar ist. Selbstverständlich ist es alternativ auch denkbar, anstelle eines Stellrings zur manuellen Betätigung durch den Anwender beispielsweise ein in axialer Richtung verlagerbares Stellglied vorzusehen. Vorteilhaft an einem Stellring ist jedoch, dass dieser in axialer Richtung vergleichsweise wenig Bauraum einnimmt, weshalb diese Lösung sich in der Praxis bewährt hat.

Weiterhin kann für einen höheren Bedienkomfort vorgesehen sein, dass optische Elemente am Außenumfang des Stellrings vorgesehen sind, anhand derer der Anwender erkennen kann, wie weit er den Stellring drehen bzw. ein axial verlagerbares Stellglied verschieben muss, um eine axiale Verlagerung des Einsatzes um eine Stufenlänge der gestuften Ausnehmung zu veranlassen. Alternativ oder zusätzlich kann ferner eine Rastanordnung an dem Stellring oder dem Stellglied vorgesehen sein, die dem Anwender durch ein haptisches und/oder akustisches Signal angibt, dass der Einsatz je Signal um eine Stufenlänge der gestuften Ausnehmung axial verschoben wurde. Neben der Signalwirkung, die eine solche Rastanordnung haben kann, kann jedoch insbesondere auch die Sicherung des Stellrings bzw. des Stellglieds in der entsprechenden Raststellung gegen eine unbeabsichtigte Änderung durch den Anwender ermöglicht werden.

Die Rastanordnung kann wenigstens ein federnd vorgespanntes Rastglied umfassen, das bei einer Drehung des Stellrings radial in korrespondierende Rastausnehmungen an dem Futterkörper oder einem weiteren Bauteil des Spannfutters einzurasten vermag. Relevant bei der Anordnung der Rastausnehmungen ist ausschließlich, dass ein Bauteil gewählt wird, das sich bei Betätigung des Stellrings nicht mit diesem mit dreht. Soll über die Rastanordnung auch ein Feststellen des axialen Einsatzes erreicht werden, so können zusätzlich mit den Rastausnehmungen an dem Futterkörper fluchtende Rastausnehmungen an dem Außenumfang der Einsatzes vorgesehen sein.

Als federnd vorgespanntes Rastglied sind unterschiedlichste Bauteile denkbar, beispielsweise eine Kugel, Halbkugel, ein Stift oder dergleichen, die in eine korrespondierende Ausnehmung einzugreifen vermag. Auch kann das Rastglied als Rastklinke ausgebildet sein, die in radialer Richtung federnd vorgespannt ist. Je nach Ausgestaltung des Rastglieds kann dieses separat von dem Stellring oder integral mit diesem ausgebildet sein. Dementsprechend kann auch die federnde Vorspannung durch ein elastisches Element, wie beispielsweise eine Feder erreicht werden oder alternativ durch die elastische Auslenkbarkeit des Rastglieds, wenn dieses integral mit dem Stellring ausgebildet ist.

Die Drehbewegung des Stellrings kann mittels einer Kulissenführung und eines darin aufgenommenen Stiftes in eine (in axialer Richtung) translatorische Bewegung des Einsatzes umgewandelt werden. Dabei kann der Stift an dem Stellring oder dem Einsatz vorgesehen sein und die Kulissenführung an dem jeweils anderen Bauteil, d. h. an dem Einsatz oder dem Stift. Selbstverständlich ist es grundsätzlich auch denkbar, andere Bauteile zur Umwandlung einer Drehbewegung in eine translatorische Bewegung vorzusehen, beispielsweise in der Art eines Gewindetriebs oder dergleichen.

Das vorstehend beschriebene erfindungsgemäße Spannfutter kann unmittelbar an einer Werkzeugmaschine, kann fest mit dieser verbunden sein und damit eine Komponente der Elektrohandwerkzeugmaschine bilden. Alternativ betrifft die vorliegende Erfindung jedoch auch eine Adapteranordnung mit einem Spannfutter mit den vorstehend beschriebenen Merkmalen zur lösbaren Verbindung mit einer Elektrohandwerkzeugmaschine, wobei die Adapteranordnung an einem Ende eine Befestigungsanordnung zur lösbaren Befestigung des Adapters mit dem Spannfutter an einem freien Ende einer Werkzeugspindel der Elektrohandwerkzeugmaschine umfasst.

Eine solche Befestigungsanordnung kann beispielsweise in der Art des bekannten Quick-Systems ausgebildet sein, wodurch eine besonders einfache und schnelle Handhabung des Adapters gewährleistet wird.

Weitere Merkmale der vorliegenden Erfindung ergeben sich aus der nachfolgenden Figurenbeschreibung sowie den Ansprüchen.

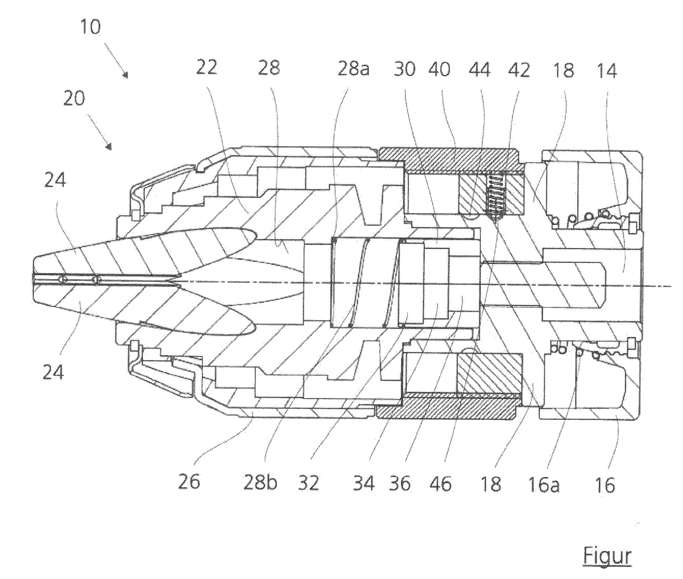

In der nachfolgenden Figurenbeschreibung ist die Erfindung detailliert unter Bezugnahme auf eine einzige Figur beschrieben, wobei einzelne Merkmale der Erfindung in Kombination miteinander dargestellt sind, die jedoch nicht notwendiger Weise miteinander kombiniert sein müssen. Der Fachmann wird aus der Gesamtschau der vorliegenden Anmeldung die einzelnen Merkmale auch losgelöst voneinander betrachten können und gegebenenfalls zu weiteren sinnvollen Unterkombinationen kombinieren können.

Die Figur zeigt schematisch einen Längsschnitt einer erfindungsgemäßen Adapteranordnung mit einem erfindungsgemäßen Spannfutter.

Die Adapteranordnung ist allgemein mit dem Bezugszeichen 10 bezeichnet und umfasst eine Befestigungsanordnung 12 mit einer Aufnahme 14 zur lösbaren Befestigung der Adapteranordnung 10 an einer Werkzeugspindel (nicht dargestellt) einer Elektrohandwerkzeugmaschine (nicht dargestellt). Die in der Figur rechter Hand dargestellte Befestigungsanordnung 12 ist in der Art eines sogenannten Quick-Systems aufgebaut und umfasst hierzu in bekannter Weise eine Verstellhülse 16, die gegen das Halteteil 18 mittels einer Feder 16a federnd vorgespannt ist. Die weiteren Details zu der Funktionsweise einer solchen Befestigungsanordnung sind im Stand der Technik wohlbekannt.

In der Figur linker Hand ist das erfindungsgemäße Spannfutter 20 dargestellt, dass einen Futterkörper 22 mit einer Innenausnehmung 28 sowie in der dargestellten Ausführungsform drei relativ zu diesem verlagerbare Spannbacken 24 umfasst. Zum Spannen bzw. Entspannen der Spannbacken 24 ist ferner eine Betätigungshülse 26 vorgesehen, die in bekannter Weise infolge einer Drehbewegung eine axiale und radiale Verlagerung der Spannbacken relativ zu dem Futterkörper 22 veranlasst. Details zur Funktionsweise eines solchen Spannfutters 20 sind dem Fachmann bekannt, weshalb auf dies vorliegend nicht näher eingegangen wird.

Wie man in der Figur weiter erkennen kann, ist in dem Inneren des Futterkörpers 22 ein Einsatz 30 vorgesehen, der sich in axialer Richtung, d. h. entlang der Längsachse L verschieben lässt.

In axialer Richtung sind ferner an diesem Einsatz drei aufeinander folgende Aufnahmen vorgesehen, die in der gezeigten beispielhaften Lösung als Vierkant-Aufnahmen 32, 34 und 36 ausgebildet sind und die zentral und zueinander ausgerichtet an dem Einsatz 30 ausgebildet sind. Diese dienen zur Aufnahme eines Vierkant-Endschafts eines Gewindebohrers und weisen dementsprechend die üblichen Schlüsselweiten auf. In der dargestellten Ausführungsform können dies beispielsweise die Schlüsselweiten der Gewinde M8 (6mm), M10 (8mm) und M12 (9mm) sein. Selbstverständlich kann der Einsatz 30 mehr oder weniger als drei derartige Vierkant-Aufnahmen und/oder alternativ oder zusätzlich wenigstens eine andersartige Mehrkant-Aufnahme, z.B. eine Zweikant- oder Dreikant-Aufnahme aufweisen, die zur Aufnahme eines Zweikant- oder Dreikant-Gewindeschafts dient. Weiterhin können auch die Abmessungen dieser Aufnahmen und die Abstufungen dieser Aufnahmen anders gewählt sein. Die Zueinanderausrichtung, d. h. das Sicherstellen der Parallelität der Seitenkanten der Vierkantausnehmungen ist vorteilhaft, da es eine einfache Herstellung des Einsatzes erlaubt, jedoch nicht zwingend notwendig.

Dadurch, dass die größte Aufnahme werkzeugseitig an dem Einsatz 30 vorgesehen ist und die kleinste Aufnahme an der Werkzeug abgewandten Seite des Einsatzes 30, ist sichergestellt, dass ein Gewindebohrer einfach über die durch die Spannbacken begrenzte Ausnehmung des Spannfutters in axialer Richtung in das Spannfutter 20 eingeführt werden kann.

Im Längsschnitt betrachtet ergibt sich durch die in axialer Richtung aufeinander folgenden und ineinander übergehenden Vierkant-Aufnahmen 32, 34 und 36 eine gestufte Ausnehmung, die in der dargestellten Ausführungsform den Einsatz 30 komplett durchdringt.

In der Figur ist weiterhin ein Verstellmechanismus zum Verstellen des Einsatzes 30, d. h. zur axialen Verlagerung des Einsatzes 30 entlang der Längsachse L, im Inneren des Futterkörpers 22 dargestellt. Hierzu ist ein Stellring 40 vorgesehen, der zur manuellen Betätigung durch einen Anwender dient. Der Stellring lässt sich von dem Anwender in radialer Richtung verdrehen, wobei in Folge seiner Drehbewegung eine translatorische Bewegung des Einsatzes 30 in axialer Richtung eingeleitet wird. Hierzu kann an dem Innenumfang des Stellrings 40 eine Kulissenführung (nicht dargestellt) vorgesehen sein, in die ein Stellstift (nicht dargestellt) des Einsatzes 30 eingreift. Zu diesem Zweck und zur axialen Führung des Einsatzes 30 kann der Futterkörper 22 beispielsweise eine Führungsnut (nicht dargestellt) aufweisen, die der Stift durchdringt.

Zur axialen Sicherung des Einsatzes 30, insbesondere damit dieser unverlierbar innerhalb des Futterkörpers 20 gehalten ist, weist der Futterkörper 22 an dem Innenumfang der Innenausnehmung 28 zudem eine Innenschulter 28a auf, an der sich der Einsatz 30 über eine Feder 28b federnd vorgespannt axial abzustützen vermag.

Weiterhin können an dem Futterkörper oder einem weiteren Bauteil, wie dem Halteteil 18 Rastausnehmungen (nicht dargestellt) 44 vorgesehen sein, in die ein federnd vorgespanntes Rastelement einer Rastanordnung einzugreifen vermag. Als Beispiel für das federnd vorgespannte Rastelement ist in der Figur eineHalbkugel 46 gezeigt, die sich über eine Feder 42 radial vorgespannt an dem Stellring abzustützen vermag.

Mit Hilfe der axialen Verstellbarkeit der Einsatzes 30 wird ein Ausgleich der unterschiedlichen Längenverhältnisse unterschiedlicher aufzunehmender Gewindebohrer erreicht.

Insgesamt dienen die Mehrkant-Aufnahmen, die in der gezeigten Ausführungsform beispielhaft als Vierkant-Aufnahmen 32, 34, 36 dargestellt sind, der Drehsicherung eines aufgenommenen Gewindebohrers, während die Spannbacken zusätzliche eine axiale Sicherung und Zentrierung ermöglichen. Die Vorteile eines üblichen Drei-Backen-Spannfutter können auf diese Weise mit denen einer Spannzange kombiniert werden, ohne dass die damit einhergehenden Nachteile (Kosten und möglicher Verlust von Spannzangen) auftreten.

## Patentansprüche

1. Spannfutter (20) zum Einspannen von Werkzeugen in eine Elektrohandwerkzeugmaschine mit einem Futterkörper (22) und relativ zum Futterkörper (22) bewegbaren Spannbacken (24) sowie einem innerhalb des Futterkörpers (22) aufgenommenen Einsatz (30), wobei der Einsatz (30) wenigstens eine zentral angeordnete Mehrkant-Aufnahme zur Aufnahme und Verdrehsicherung eines korrespondierenden Mehrkant-Endabschnitts eines Gewindebohrers aufweist und wobei im montierten Zustand des Spannfutters (20) der Einsatz (30) unverlierbar innerhalb des Futterkörpers (22) aufgenommen ist.

2. Spannfutter (20) nach Anspruch 1,
wobei der Einsatz (30) mehrere in axialer Richtung ineinander übergehende zentral angeordnete Mehrkant-Aufnahmen aufweist, die unterschiedliche Größen haben und in einem Längsschnitt betrachtet eine gestufte Ausnehmung bilden.

3. Spannfutter (20) nach Anspruch 1 oder 2,
wobei die wenigstens eine Mehrkant-Aufnahme als Zweikant-, Dreikant- oder Vierkantaufnahme (32, 34, 36) ausgebildet sein kann.

4. Spannfutter (20) nach einem der vorhergehenden Ansprüche,
wobei der Einsatz (30) innerhalb des Futterkörpers (22) axial verlagerbar ist.

5. Spannfutter (20) nach Anspruch 4,
wobei ein separat ausgebildeter Stellring (40) vorgesehen ist, der zur axialen Verstellung des Einsatzes (30) relativ zu dem Einsatz manuell verdrehbar ist.

6. Spannfutter (20) nach Anspruch 5,
wobei eine Rastanordnung an dem Stellring (40) vorgesehen ist, die dem Anwender optional durch ein haptisches und/oder akustisches Signal angibt, dass der Einsatz je Signal um eine Stufenlänge der gestuften Ausnehmung axial verschoben wurde.

7. Spannfutter (20) nach Anspruch 6,
wobei die Rastanordnung wenigstens ein federnd vorgespanntes Rastglied umfasst, das bei einer Drehung des Stellrings (40) radial in korrespondierende Rastausnehmungen an dem Futterkörper (22) oder einem weiteren Bauteil des Spannfutters einzurasten vermag.

8. Spannfutter (20) nach einem der Ansprüche 5 bis 7,
wobei die Drehbewegung des Stellrings (40) über eine Kulissenführung und einen darin aufgenommenen Stift in eine in axialer Richtung translatorische Bewegung des Einsatzes (30) umgewandelt wird, wobei der Stift an dem Stellring (40) oder dem Einsatz (30) vorgesehen ist und die Kulissenführung an dem jeweils anderen Bauteil.

9. Adapteranordnung (10) mit einem Spannfutter (20) nach einem der vorhergehenden Ansprüche zur lösbaren Verbindung mit einer Elektrohandwerkzeugmaschine, wobei die Adapteranordnung (10) an einem Ende eine Befestigungsanordnung (12) zur lösbaren Befestigung des Adapters (10) mit dem Spannfutter (20) an einem freien Ende einer Werkzeugspindel der Elektrohandwerkzeugmaschine umfasst.
